(19) Europäisches Patentamt
European Patent Office
Office européen des brevets

(11) **EP 2 207 861 B1**

(12) **EUROPEAN PATENT SPECIFICATION**

(45) Date of publication and mention
of the grant of the patent:
**25.01.2017 Bulletin 2017/04**

(21) Application number: **08840584.0**

(22) Date of filing: **17.10.2008**

(51) Int Cl.:
*C09J 7/02* (2006.01)      *C08K 3/00* (2006.01)
*C08K 3/22* (2006.01)      *C08K 5/00* (2006.01)
*C08K 5/5313* (2006.01)    *C09K 21/04* (2006.01)
*C09J 11/02* (2006.01)     *C09J 135/06* (2006.01)
*C09J 133/08* (2006.01)

(86) International application number:
**PCT/US2008/080242**

(87) International publication number:
**WO 2009/052335 (23.04.2009 Gazette 2009/17)**

(54) **HALOGEN-FREE FLAME RETARDANT ADHESIVE COMPOSITIONS AND ARTICLE CONTAINING SAME**

HALOGENFREI FLAMMWIDRIGE KLEBEMITTEL UND SIE ENTHALTENDES ERZEUGNIS

COMPOSITIONS ADHÉSIVES RETARDATRICES DE FLAMME EXEMPTES D'HALOGÈNE ET ARTICLE CONTENANT CES COMPOSITIONS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **19.10.2007 US 875701**

(43) Date of publication of application:
**21.07.2010 Bulletin 2010/29**

(73) Proprietor: **3M Innovative Properties Company St. Paul, MN 55133-3427 (US)**

(72) Inventors:
• **GARCIA-RAMIREZ, Rafael**
  **Saint Paul, Minnesota 55133-3427 (US)**
• **PYUN, Eumi**
  **Saint Paul, Minnesota 55133-3427 (US)**
• **SU, Wei-Cheng**
  **Taipei 10682 (TW)**
• **LIAO, Mei-Chin**
  **Taipei 10682 (TW)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(56) References cited:
**JP-A- 2002 284 963      JP-A- 2006 193 584**
**JP-A- 2008 111 102      US-A- 6 022 914**
**US-A1- 2006 234 045**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

The present invention relates to flame retardant adhesive compositions and adhesive tape articles. Adhesives and adhesive tape articles are used in many industries and for many different purposes. Adhesives and adhesive tape articles are commonly used, for example, in the electrical industry as insulating tapes and in myriad other applications. In many such applications, there exists a desire, or even a need, for flame resistance or flame retardancy. The most widely known and used flame retardant materials and additives utilize one or more halogen-containing (e.g., bromine- or chlorine-containing) compounds. Increased environmental and safety scrutiny, however, drives a movement to reduce or eliminate the presence of halogenated and halogen-containing materials in many industrial and consumer products. Currently available non-halogenated or halogen-free adhesives and adhesive tape articles fail to demonstrate an ability to offer desired flame resistance and flame retardant properties, pass industry standard UL 510 testing and achieve a Comparative Tracking Index ("CTI") Rating of I.

US 2006/0234045 A1 refers to a flame retardant adhesive composition including (A) a halogen-free epoxy resin, (B) a thermoplastic resin and/or a synthetic rubber, (C) a curing agent, (D) an organophosphinate compound, and (E) a curing accelerator.

SUMMARY

Briefly, in one aspect, the present invention provides adhesive compositions useful, for example, in the construction of a tape article. The adhesive composition is a halogen-free, flame retardant adhesive composition comprising:

> (a) an adhesive component consisting essentially of one or more acrylic adhesives, and
> (b) a halogen-free flame retardant component comprising a phosphinate or phosphinate salt, wherein the phosphinate or phosphinate salt comprises from about 17% to about 100% by weight of the flame retardant component, wherein the halogen-free, flame retardant adhesive composition is a pressure sensitive adhesive.

The halogen-free flame retardant adhesive composition includes optionally, one or more other non-halogenated flame retardant materials such as, for example, alumina trihydrate and magnesium hydroxide.

In other aspects, the invention provides articles that comprise a tape. The tape comprises:

> a backing material that is substantially free of a halogen-containing materials;
> a pressure-sensitive adhesive component consisting essentially of one or more acrylic adhesives and disposed on at least one face of the backing material; and
> a halogen-free flame retardant component present in the acrylic adhesive composition, the flame retardant component comprising a phosphinate or phosphinate salt wherein the phosphinate or phosphinate salt comprises from about 17% to about 100% by weight of the flame retardant component.

The halogen-free flame retardant component includes optionally, one or more other non-halogenated flame retardant materials such as, for example, alumina trihydrate and magnesium hydroxide.

Further described are various articles that include a tape article construction. The tape article constructions comprise an adhesive composition, a halogen-free flame retardant composition and a halogen-free backing material. The halogen-free flame retardant composition can be present in or incorporated into either or both the adhesive composition and the backing material. The halogen-free flame retardant composition may also be present as or incorporated into an independent structural or functional layer within the tape article constructions. The halogen-free flame retardant composition includes a phosphinate (or phosphinate salt) and, optionally, one or more other non-halogenated flame retardant materials such as, for example, alumina trihydrate and magnesium hydroxide.

In yet other aspects, the invention provides tape articles and adhesive compositions that during application and use exhibit flame retardant properties, pass industry standard UL 510 testing and achieve a Comparative Tracking Index ("CTI") rating of 1.

DETAILED DESCRIPTION OF PREFERRED EMBODIMENTS

Briefly, embodiments of the present invention provide adhesive compositions and tape articles that comprise a composition that includes or incorporates one or more halogen-free flame retardants. The resistance of the flame retardant composition to flammability can be demonstrated by passing the flame retardant testing portion of industry standard UL 510 test. The flame retardant compositions contain substantially no amount of a halogenated or halogen-containing material. The halogen-free flame retardant compositions generally comprise a phosphinate (or phosphinate salt). The flame retardant compositions may also include one or more additional non-halogenated flame retardant materials such as, for example, alumina trihydrate ($Al_2O_3 \cdot 3H_2O$) or magnesium hydroxide ($Mg(OH)_2$).

In certain embodiments, the halogen-free flame retardant compositions of the invention include a phosphinate. The phosphinate can be in the form of, for example, a phosphinate salt. More particularly, the phosphinate can be incorporated into the flame retardant composition as a metal phosphinate salt. Suitable metal phosphinate salts include, for example, aluminum phosphinate salts and zinc phosphinate salts.

In other embodiments, the halogen-free flame retardant composition includes a blend composition that includes a phosphinate (or phosphinate salt) used together with one or more additional halogen-free flame retardant substances. Suitable such additional substances include, for example, alumina trihydrate ($Al_2O_3 \cdot 3H_2O$) and magnesium hydroxide ($Mg(OH)_2$). When constituting a blend, the flame retardant compositions will generally comprise at least one phosphinate (or phosphinate salt) in an amount from about 17% to about 100% by weight of the flame retardant composition, and one or more additional flame retardant substances in an amount from about 0% to about 83% by weight of the flame retardant composition. The use of a phosphinate-containing flame retardant composition incorporated into an adhesive composition or an adhesive tape article shows advantageous properties and characteristics required to pass industry standard UL 510 flammability testing and achieve a Comparative Tracking Index ("CTI") rating of I.

In various embodiments of the invention, the halogen-free flame retardant composition is blended or combined with an adhesive material. Because of the general desire to minimize or eliminate halogenated materials from commercial and consumer products, the adhesive materials into which the flame retardant compositions are incorporated are preferably also substantially free of halogen-containing compounds. Useful adhesive compositions include myriad different types and forms of adhesives. In describing a suitable adhesive by its properties or characteristics, adhesives such as pressure sensitive adhesives, thermoset adhesives, hot-melt adhesives, and other types of adhesives can be used. In describing a suitable adhesive by its relative chemical composition, adhesives such as acrylic adhesives, polyolefin adhesives, styrenic copolymer adhesives, silicone adhesives, epoxy adhesives, ethylene co-polymer adhesives, and other types of adhesives can be used. The halogen-free flame retardant compositions of the invention can be incorporated into such adhesive materials to impart desired flame retardant and flame resistant properties to the adhesives.

Adhesives incorporating the flame retardant compositions of the invention may be used in any application for which the underlying adhesive is intended and for which a degree of flame retardancy and flame resistance is desired. The halogen-free flame retardant compositions of the invention find particular utility in the construction of tape articles. Such tape articles generally comprise a backing material onto which one or more functional or structural layers are applied (typically by coating). One or more of the halogen-free flame retardant compositions of the invention may be used in or with such tape articles by incorporating the compositions into the backing material and/or one or more of the functional or structural layers. The flame retardant composition may, for example, be incorporated into an adhesive composition which is applied to a backing material, or it may be applied as, or together with, a non-adhesive layer within the tape article construction independent of an adhesive layer. It may also be incorporated directly into the backing material alone or in combination with its incorporation into one or more of the functional or structural layers of the overall tape construction. There is, therefore, great flexibility in the utility of the flame retardant compositions of the invention within a tape article construction.

The halogen-free flame retardant compositions can comprise, for example, solely one or more phosphinate compounds or a blend of one or more phosphinate compounds with one or more additional flame retardant compounds (e.g., alumina trihydrate or magnesium hydroxide). The flame retardant compositions may also be used in adhesive compositions or tape articles together with other materials. Many adhesive compositions, for example, include one or more cross-linking compositions such as, for example, a bis-amide. Adhesive and tape articles also often incorporate one or more tackifier compounds to manage a desired tack characteristic of the adhesive or tape. Other customary additives, adjuvants, agents and materials (*e.g.*, colorants, pigments, primers, fillers, uv absorbers, conductive particles, *etc.*) are understood by those skilled in the art.

In one illustrative embodiment of the invention, a multi-layered tape article includes a halogen-free flame retardant adhesive composition of the invention applied to a backing material. In this case, an adhesive composition contains the halogen-free flame retardant composition as a layer applied to a backing material. Such an adhesive layer can be of any desired and workable thickness, but is generally in the range from about 12 $\mu$m to about 80 $\mu$m or possibly more. The backing material is, preferably, free of halogen-containing compounds. Suitable backing materials include, for example: polymer materials such as polyesters (*e.g.*, PET (polyethylene terephthalate), polyolefins, polyamides and polyimides; natural and synthetic rubber materials; paper materials; metal foils, glass cloths; and other types of materials. The backing can be of any desired and workable thickness, but is generally between about 25 $\mu$m and about 125 $\mu$m thick.

Tape articles that include the halogen-free compositions of the invention can include a primer disposed between the adhesive composition and the backing. A suitable primer is commercially available as 3M™ P-93 Primer from 3M Company of Saint Paul, Minnesota, USA. Tape articles can also be constructed to include a low adhesion backing (or "LAB") material on the side of the backing opposite the side including the adhesive composition and, if present, the primer. The low adhesion backing material helps prevent individual pieces of tape from adhering to each other when a roll is manufactured and wound. Suitable LAB materials include urethane polymers such as 3M™ RD-1547 Urethane Polymer Solution from 3M Company of Saint Paul, Minnesota, USA.

**Examples**

The following examples and comparative examples are offered to aid in the understanding of the present invention and are not to be construed as limiting the scope thereof. Unless otherwise indicated, all parts and percentages are by weight. The following test methods and protocols were employed in the evaluation of the illustrative and comparative examples that follow:

**Test Methodologies**

1. UL 510 Flammability Test:

A specimen is exposed to an open flame for a period of fifteen seconds. Upon exposure to the flame, any flame on the test specimen (which typically catches fire) must extinguish in less than 60 seconds to pass the test. The test is repeated five times. Any extinguishing time longer than 60 seconds is considered a failure for the specimen. Results are reported as "Pass" or "Fail." Further information regarding the test may be found in the description of the UL 510 standard published by Underwriters Laboratory of Northbrook, Illinois, USA.

2. Dry and Wet Dielectric Strength:

Testing for dry and wet dielectric strength was performed according to the protocol of ASTM D149. In general, according to this test a sample is placed between two electrodes and power is increased until there is a dielectric failure. Testing for "dry" dielectric strength was performed at room temperature and 50% relative humidity. Testing for "wet" dielectric strength was performed upon exposure of the sample for 96 hours at 23 °C and 96% relative humidity. To pass the dry dielectric strength test, the dielectrics must be greater than or equal to 1000 V/mil. To pass the wet dielectric strength test, at least 90% of the dry dielectric strength must be retained (*i.e.*, the wet dielectrics are greater than or equal to 900 V/mil).

3. Comparative Tracking Index ("CTI"):

The Comparative Tracking Index (or "CTI") of a material is a measure of the resistance of a material to surface tracking under defined test conditions. The protocol for the test is set forth in ASTM D3638-07. In general, to perform the test the upper surface of a test specimen is supported in an approximately horizontal plane and subjected to an electrical stress via two electrodes. The surface between the electrodes is subjected to a succession of drops of an electrolyte solution until the over-current device operates, until a persistent flame occurs or until the testing period has elapsed. Individual tests are of short duration (less than 1 hour) with up to 50 or 100 drops of about 20 mg of electrolyte solution falling at 30 second intervals between platinum electrodes spaced 40 mm apart on the test specimen surface. An alternating current voltage between 100 V and 600 V is applied to the electrodes during the test.

Results are plotted to record the number of drops of electrolyte solution placed on the surface of the specimen versus the recorded voltage. The Comparative Track Index, or CTI, represents the voltage corresponding to 50 drops of electrolyte solution. The lower the CTI rating for a given material, the greater is the creepage distance associated with that material. A CTI Rating is given as follows:

CTI Rating I: $CTI \geq 600$ V
CTI Rating II: $400$ V $\leq CTI < 600$ V
CTI Rating IIIa: $175$ V $\leq CTI < 400$ V
CTI Rating IIIb: $100$ V $\leq CTI \leq 175$ V

4. UL 510 Adhesion to Steel:

The UL 10 Adhesion to Steel standard requires an adhesion value of at least 16 oz/in (18 g/mm) measured according to ASTM D1000.

5. <u>Opacity:</u>

Opacity was tested according to ASTM D589-97. In general, to perform the test a film sample is placed on a black/white contrast chart. After air-drying, the drawdown of a sample is objectively evaluated using a BYK-Gardner type spectrometer guide. Results are reported as percent opacity, calculated as:

$$Y_{Black} / Y_{White} \text{ x } 100\%$$

**Comparative Examples C1 to C3**

Tape samples were constructed to illustrate the performance of several known flame retardant compositions. For each comparative example, an acrylic adhesive polymer (3M™ Product No. 21-3314-0004-0, from 3M Company, Saint Paul, Minnesota, USA) was combined with a flame retardant composition as indicated in Table 1 below. In each case the mixture comprised between 30 and 40 wt% of the flame retardant. The ingredients were mixed using a laboratory-size high intensity mixer in the presence of a solvent (heptane, ethyl acetate or a blend of both). The mixed adhesive composition was coated directly onto a primed 25 μm thick PET film using either a laboratory knife-coater to produce handspread samples or a pilot-size coater (equipped with a knife-coater) to produce a continuous coated film with a nominal coating thickness of about 25 μm. After coating, the samples were either placed in a forced-convection oven (in the case of the handspread samples) or continuously passed through a tunnel oven (in the case of the continuous film) to extract the solvent and dry the sample. The coated and dried samples were then cut or slit to produce 0.75 inch (1.9 cm) samples. The samples were subjected to the test methodologies described above and the results are provided in Table 1 below.

**Table 1**

| Comparative Example | Flame Retardant | UL 510 Flammability | UL 510 Dielectric Breakdown (% Retention) | CTI Rating |
|---|---|---|---|---|
| C1 | Decabromo di-phenyl ethane (Saytex™ 8010 from Albermarle Co.. Baton Rouge, LA, USA) | PASS | PASS | II |
| C2 | Ammonium polyphosphate (Product "S XS10 from Budenheim Iberica Co., Zaragoza, Spain) | PASS | FAIL | IIIa |
| C3 | Polyphosphoric acid salt (Zuran™ 484 from Chitec Technology Corp., Taipei, Taiwan) | PASS | FAIL | IIIa |

Each of Comparative Examples C1 to C3, as shown in Table 1 above, exhibit acceptable UL 510 flammability performance. Comparative Example C1, which includes a halogen-containing flame retardant, passes the UL 510 Dielectric Breakdown test but exhibits a CTI Rating of only II (thereby failing to achieve a CTI Rating of I). Comparative Examples C2 and C3, which each contains a non-halogenated flame retardant, fail to pass the UL 510 Dielectric Breakdown test and achieve a CTI Rating of only IITa (thereby also failing to achieve a CTI Rating of I).

**Examples 1-9 and Comparative Examples C4 to C7**

Tape samples were constructed to illustrate various embodiments of the invention. To prepare tape samples for a given example or comparative example, an adhesive composition was prepared containing the ingredients identified in Table 2 below in the amounts identified in Table 3. For each sample, the ingredients for the adhesive composition were mixed using a laboratory-size high intensity mixer in the presence of a solvent (heptane, ethyl acetate or a blend of both). The resulting composition was coated directly onto a primed 25 μm thick PET film using either a laboratory knife-coater to produce handspread samples or a pilot-size coater (equipped with a knife-coater) to produce a continuous coated film with a nominal coating thickness of about 25 μm. After coating, the samples were either placed in a forced-convection oven (in the case of the handspread samples) or continuously passed through a tunnel oven (in the case of the continuous film) to extract the solvent and dry the sample. The coated and dried samples were then cut or slit to produce 0.75 inch (1.9 cm) samples. The samples were subjected to the test methodologies described above and the results are indicated in Table 3 below.

**Table 2**

| Adhesive Ingredient | Product Name | Source |
|---|---|---|
| Acrylic adhesive polymer | 3M™ Product Number 21-3314-0004-0 | 3M Company, St. Paul, MN |
| Tackifier | RE80H | Arizona Chemical, USA |
| Aluminum Phosphinate Salt | OP935 | Variant, Germany |
| Alumina trihydrate | Hymod M932-SG | Huber, USA |
| $TiO_2$ | N/A | Dupont, Taiwan |
| Yellow pigment | 3M™ Product Number 11-3313-5022-0 | 3M Company, St. Paul, MN |
| Bis-amide crosslinker | 3M™ Product Number 41-4100-1054-4 | 3M Company, St. Paul, MN |
| **Film Backing Material** | | |
| PET Film | Tairilin BP25 | Nan Ya, Taiwan |
| Primer | 3M™ P-93 Primer | 3M Company, St. Paul, MN |

Table 3

| Example | Ratio Phosphinate to ATH | TiO$_2$ (phr)[1] | Filler (phr)[1,2] | Thickness ($\mu$m)[3] | Opacity (%) | UL 510 Ad. to Steel (oz/in) | UL 510 Flamm. | UL 510 Dielectric Breakdown (kV) | UL 510 Wet Dielectric Breakdown (kV) | Percent Retention (90% min) | CTI Rating |
|---|---|---|---|---|---|---|---|---|---|---|---|
| 1 | 100 / 0 | 0 | 40.2 | 51 | 3 | 24 | PASS | 5.63 | 5.02 | 90% (PASS) | I |
| 2 | 100 / 0 | 12.1 | 45.8 | 60 | 73 | 29 | PASS | 6.13 | 6.20 | 101% (PASS) | I |
| 3 | 81 / 19 | 11.8 | 55.0 | 54 | 64 | 25 | PASS | 6.26 | 6.24 | 100% (PASS) | I |
| 4 | 71 / 29 | 0 | 43.3 | 50 | 2 | 32 | PASS | 6.06 | 5.86 | 97% (PASS) | I |
| 5 | 68 / 32 | 0 | 40.1 | 74 | 5 | 40 | PASS | 6.06 | 6.0 | 99.8% (PASS) | I |
| 6 | 50 / 50 | 0 | 54.0 | 62 | 5 | 30 | PASS | 5.72 | 6.2 | 108.9% (PASS) | I |
| 7 | 40 / 60 | 0 | 67.0 | 62 | 3 | 31 | PASS | 5.57 | 5.8 | 103.9% (PASS) | I |
| 8 | 30 / 70 | 0 | 90.0 | 63 | 4 | 27 | PASS | 6.07 | 6.0 | 99.4% (PASS) | I |
| 9 | 20 / 80 | 0 | 137.0 | 57 | 5 | 18 | PASS | 5.77 | 6.3 | 108.4% (PASS) | I |
| C4 | 15 / 85 | 0 | 180.0 | 77 | 8 | 7 (FAIL) | PASS | 6.83 | 8.3 | 121.5% (PASS) | I |
| C5 | 11 / 90 | 0 | 185.0 | 50 | 7 | 0.2 (FAIL) | FAIL | 6.47 | 6.1 | 101.2% (PASS) | I |
| C6 | 0 / 100 | 0 | 80.3 | 65 | 5 | 38 | FAIL | 5.92 | 6.25 | 105.6% (PASS) | I |
| C7 | 0 / 100 | 0 | 162 | 50 | 5 | 4 (FAIL) | FAIL | 6.07 | 6.1 | 94% (PASS) | I |

[1] On the basis of adhesive + tackifier

[2] Total filler concentration, including flame retardant and TiO$_2$

[3] Thickness of the whole tape construction

Examples 1-9 demonstrate that incorporation of a halogen-free flame retardant composition according to embodiments of the invention that include a phosphinate salt alone or in combination with alumina trihydrate into a tape article construction impart favorable physical properties. Each of these examples pass industry standard UL 510 flammability and dielectric breakdown testing (i.e., the wet dielectric strength is at least 90% of the dry dielectric strength). Each also achieves a CTI rating of I. The illustrated examples also offer flexibility, with the inclusion of additional additives, to control the level of adhesion and opacity of the tape articles into which the flame retardant compositions are incorporated. Flame retardant compositions that include both a phosphinate and alumina trihydrate at a ratio of less than about 17% phosphinate by weight of the flame retardant composition require higher levels of the blended flame retardant to be present in the adhesive composition to achieve a desired level of flame resistance. This generally negatively affects the adhesive properties of the adhesive composition and are therefore not preferred.

**Claims**

1. A halogen-free, flame retardant adhesive composition comprising :

   (a) an adhesive component consisting essentially of one or more acrylic adhesives, and
   (b) a halogen-free flame retardant component comprising a phosphinate or phosphinate salt, wherein the phosphinate or phosphinate salt comprises from 17% to 100% by weight of the flame retardant component,
   wherein the halogen-free, flame retardant adhesive composition is a pressure sensitive adhesive.

2. An article of manufacture comprising a tape comprising:

   a backing material that is substantially free of a halogen-containing material;
   a pressure-sensitive adhesive component consisting essentially of one or more acrylic adhesives and disposed on at least one face of the backing material; and
   a halogen-free flame retardant component present in the acrylic adhesive composition, the flame retardant component comprising a phosphinate or phosphinate salt wherein the phosphinate or phosphinate salt comprises from 17% to 100% by weight of the flame retardant component.

3. The composition of claim 1 or article of claim 2 wherein the halogen-free flame retardant component further comprises at least one additional material which is substantially free of halogen-containing compounds.

4. The composition or article of claim 3 wherein the at least one additional material includes alumina trihydrate.

5. The composition or article of claim 3 wherein the at least one additional material includes magnesium hydroxide.

6. The article of claim 2 wherein a halogen-free flame retardant component comprising a phosphinate or phosphinate salt is present in the backing material.

7. The article of claim 2 further comprising at least one additional structural or functional layer disposed on at least one face of the backing material.

8. The article of claim 7 wherein the at least one additional structural or functional layer includes the flame retardant component.

9. The composition of claim 1 or article of claim 2 wherein the phosphinate salt is a metal phosphinate salt.

10. The composition or article of claim 9 wherein the metal phosphinate salt is an aluminum phosphinate salt or a zinc phosphinate salt.

11. The article of claim 2 wherein the backing material comprises a polyester, polyolefin, polyamide or polyimide polymeric material.

12. The composition or article of claim 3 wherein the at least one additional material comprises from 0% to 83 % by weight of the halogen-free flame retardant component.

## EP 2 207 861 B1

**Patentansprüche**

1. Halogenfreie, flammenhemmende Klebstoffzusammensetzung, umfassend:

   (a) einen Klebstoffbestandteil, der im Wesentlichen aus einem oder mehreren Acrylklebstoffen besteht, und
   (b) einen halogenfreien flammenhemmenden Bestandteil, der ein Phosphinat oder Phosphinatsalz umfasst, wobei das Phosphinat oder Phosphinatsalz von 17 Gew.-% bis 100 Gew.-% des flammenhemmenden Bestandteils umfasst,
   wobei die halogenfreie, flammenhemmende Klebstoffzusammensetzung ein druckempfindlicher Klebstoff ist.

2. Herstellungsartikel, umfassend ein Klebeband, das Folgendes umfasst:

   ein Unterlagsmaterial, das im Wesentlichen frei von einem halogenhalti-gen Material ist;
   einen druckempfindlichen Klebstoffbestandteil, der im Wesentlichen aus einem oder mehreren Acrylklebstoffen besteht und auf mindestens einer Seite des Unterlagsmaterials angeordnet ist; und
   einen halogenfreien flammenhemmenden Bestandteil, der in der Acrylklebstoffzusammensetzung vorhanden ist, wobei der flammenhemmende Bestandteil ein Phosphinat oder Phosphinatsalz umfasst, wobei das Phosphinat oder Phosphinatsalz von 17 Gew.-% bis 100 Gew.-% des flammenhemmenden Bestandteils umfasst.

3. Zusammensetzung nach Anspruch 1 oder Artikel nach Anspruch 2, wobei der halogenfreie flammenhemmende Bestandteil ferner mindestens ein zusätzliches Material umfasst, das im Wesentlichen frei von halogenhaltigen Verbindungen ist.

4. Zusammensetzung oder Artikel nach Anspruch 3, wobei das mindestens eine zusätzliche Material Aluminiumoxid-Trihydrat umfasst.

5. Zusammensetzung oder Artikel nach Anspruch 3, wobei das mindestens eine zusätzliche Material Magnesiumhydroxid umfasst.

6. Artikel nach Anspruch 2, wobei ein halogenfreier flammenhemmender Bestandteil, der ein Phosphinat oder Phosphinatsalz umfasst, in dem Unterlagsmaterial vorhanden ist.

7. Artikel nach Anspruch 2, ferner umfassend mindestens eine zusätzliche Struktur- oder Funktionsschicht, die auf mindestens einer Seite des Unterlagsmaterials angeordnet ist.

8. Artikel nach Anspruch 7, wobei die mindestens eine zusätzliche Struktur- oder Funktionsschicht den flammenhemmenden Bestandteil umfasst.

9. Zusammensetzung nach Anspruch 1 oder Artikel nach Anspruch 2, wobei das Phosphinatsalz ein Metallphosphinatsalz ist.

10. Zusammensetzung oder Artikel nach Anspruch 9, wobei das Metallphosphinatsalz ein Aluminiumphosphinatsalz oder ein Zinkphosphinatsalz ist.

11. Artikel nach Anspruch 2, wobei das Unterlagsmaterial ein Polyester-, Polyolefin-, Polyamid- oder Polyimid-Polymermaterial umfasst.

12. Zusammensetzung oder Artikel nach Anspruch 3, wobei das mindestens eine zusätzliche Material von 0 Gew.-% bis 83 Gew.-% des halogenfreien flammenhemmenden Bestandteils umfasst.

**Revendications**

1. Composition adhésive ignifugeante sans halogène comprenant :

   (a) un composant adhésif constitué essentiellement d'un ou plusieurs adhésifs acryliques, et
   (b) un composant ignifugeant sans halogène comprenant un phosphinate ou sel de phosphinate, dans laquelle le phosphinate ou sel de phosphinate constitue de 17 % à 100 % en poids du composant ignifugeant,

9

où la composition adhésive ignifugeante sans halogène est un adhésif sensible à la pression.

2. Article manufacturé comprenant un ruban comprenant :

un matériau de support qui est sensiblement exempt de matériau halogéné ;
un composant adhésif sensible à la pression constitué essentiellement d'un ou plusieurs adhésifs acryliques et disposé sur au moins une face du matériau de support ; et
un composant ignifugeant sans halogène présent dans la composition adhésive acrylique, le composant ignifugeant comprenant un phosphinate ou sel de phosphinate dans lequel le phosphinate ou sel de phosphinate constitue de 17 % à 100 % en poids du composant ignifugeant.

3. Composition selon la revendication 1 ou article selon la revendication 2, dans lequel le composant ignifugeant sans halogène comprend en outre au moins un matériau supplémentaire qui est sensiblement exempt de composés halogénés.

4. Composition ou article selon la revendication 3, dans lequel ledit au moins un matériau supplémentaire inclut du trihydrate d'alumine.

5. Composition ou article selon la revendication 3, dans lequel ledit au moins un matériau supplémentaire inclut de l'hydroxyde de magnésium.

6. Article selon la revendication 2, dans lequel un composant ignifugeant sans halogène comprenant un phosphinate ou sel de phosphinate est présent dans le matériau de support.

7. Article selon la revendication 2, comprenant en outre au moins une couche structurelle ou fonctionnelle supplémentaire disposée sur au moins une face du matériau de support.

8. Article selon la revendication 7, dans lequel ladite au moins une couche structurelle ou fonctionnelle supplémentaire inclut le composant ignifugeant.

9. Composition selon la revendication 1 ou article selon la revendication 2, dans lequel le sel de phosphinate est un sel métallique de phosphinate.

10. Composition ou article selon la revendication 9, dans lequel le sel métallique de phosphinate est un sel de phosphinate d'aluminium ou un sel de phosphinate de zinc.

11. Article selon la revendication 2, dans lequel le matériau de support comprend un matériau polymère de polyester, polyoléfine, polyamide ou poly-imide.

12. Composition ou article selon la revendication 3, dans lequel ledit au moins un matériau supplémentaire constitue de 0 % à 83 % en poids du composant ignifugeant sans halogène.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060234045 A1